(19) Europäisches Patentamt
European Patent Office
Office européen des brevets

(11) **EP 4 431 547 A1**

(12) **EUROPEAN PATENT APPLICATION**
published in accordance with Art. 153(4) EPC

(43) Date of publication:
**18.09.2024 Bulletin 2024/38**

(51) International Patent Classification (IPC):
*C08G 81/02* (2006.01)        *A43B 13/04* (2006.01)
*C08L 53/00* (2006.01)

(21) Application number: **22892671.3**

(52) Cooperative Patent Classification (CPC):
**A43B 13/04; C08G 81/02; C08L 53/00**

(22) Date of filing: **01.11.2022**

(86) International application number:
**PCT/JP2022/040873**

(87) International publication number:
**WO 2023/085172 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.11.2021 JP 2021182591**
**08.03.2022 JP 2022035192**

(71) Applicant: **Sanyo Chemical Industries, Ltd.**
**Kyoto-shi, Kyoto 605-0995 (JP)**

(72) Inventors:
• **TOKUNAGA, Hironobu**
  **Kyoto-shi, Kyoto 605-0995 (JP)**
• **HATTORI, Masanori**
  **Kyoto-shi, Kyoto 605-0995 (JP)**
• **TANAKA, Yuhei**
  **Kyoto-shi, Kyoto 605-0995 (JP)**

(74) Representative: **Mewburn Ellis LLP**
**Aurora Building**
**Counterslip**
**Bristol BS1 6BX (GB)**

(54) **SHOE SOLE BLOCK POLYMER, SHOE SOLE RESIN COMPOSITION, AND SHOE SOLE**

(57)     An object of the present invention is to provide a shoe sole exhibiting small compressive strain. The present invention relates to a block polymer (X) for a shoe sole, containing as constituent units: a block of polyolefin (a) below; and a block of polyalkylene glycol (b) below, the polyolefin (a) containing propylene and ethylene as constituent monomers with a weight ratio of propylene to ethylene (propylene/ethylene) within a range of 90/10 to 99.5/0.5, and the polyalkylene glycol (b) containing C3-C4 alkylene glycol as a constituent monomer.

EP 4 431 547 A1

**Description**

TECHNICAL FIELD

The present invention relates to a block polymer for a shoe sole, a resin composition for a shoe sole, and a shoe sole.

BACKGROUND ART

EVA resin (ethylene vinyl acetate resin) is generally used as a resin for a shoe sole. For example, soles for sports shoes formed of multiple members fabricated using EVA resin have been proposed (for example, Patent Literature 1).

CITATION LIST

- Patent Literature

Patent Literature 1: JP 2008-093412 A

SUMMARY OF INVENTION

- Technical Problem

Soles fabricated using EVA resin are inexpensive, but are thus inferior in durability due to a large compressive strain, and also inferior in resilience, so it is required to solve these problems.
An object of the present invention is to provide a shoe sole exhibiting small compressive strain.

- Solution to Problem

The present inventors have conducted extensive studies to solve the problems, and as a result, have achieved the present invention. In other words, the present invention is a block polymer (X) for a shoe sole including a block of polyolefin (a) below and a block of polyalkylene glycol (b) below as constituent units:

the polyolefin (a) containing propylene and ethylene as constituent monomers with a weight ratio of propylene to ethylene (propylene/ethylene) within a range of 90/10 to 99.5/0.5; and
the polyalkylene glycol (b) containing C3-C4 alkylene glycol as a constituent monomer;
a resin composition (Y) for a shoe sole, containing the block polymer (X) for a shoe sole and a thermoplastic resin (E) other than the block polymer (X) for a shoe sole; and
a shoe sole (Z) that is a molded foam of the block polymer (X) for a shoe sole or a molded foam of the resin composition (Y) for a shoe sole.

- Advantageous Effects of Invention

The shoe sole (Z) fabricated using the block polymer (X) for a shoe sole or the resin composition (Y) for a shoe sole of the present invention exerts an effect of exhibiting small compressive strain, excellent durability, and excellent resilience.

DESCRIPTION OF EMBODIMENTS

<Polyolefin (a)>

Examples of the polyolefin (a) in the present invention includes a polyolefin (a1-1) having a carboxy group or a carboxylic anhydride group at both ends of the polymer; a polyolefin (a1-2) having a hydroxy group at both ends of the polymer, a polyolefin (a1-3) having an amino group at both ends of the polymer, a polyolefin (a1-4) having an isocyanate group at both ends of the polymer, a polyolefin (a1-5) having both a carboxy group and a hydroxy group at both ends of the polymer, a polyolefin (a2-1) having a carboxy group or a carboxylic anhydride group at one end of the polymer, a polyolefin (a2-2) having a hydroxy group at one end of the polymer, a polyolefin (a2-3) having an amino group at one end of the polymer, a polyolefin (a2-4) having an isocyanate group at one end of the polymer, and a polyolefin (a2-5) having both a carboxy group and a hydroxy group at one end of the polymer.

The polyolefins (a1-1) to (a2-5) may be obtained by known production methods.

Of these, the polyolefin (a1-1) and the polyolefin (a2-1) having a carboxy group or a carboxylic anhydride group at both ends/one end of the polymer are preferable from the viewpoint of ease of modification and heat resistance during molding.

The term "end" as used herein refers to a trailing end where the repeating structure of a monomer unit constituting the polymer is interrupted. The term "both ends" mean both ends of the main chain of the polymer, and the term "one end" means either end of the main chain of the polymer.

The polyolefin (a) can be obtained, for example, by introducing a carboxy group, a carboxylic anhydride group, a hydroxy group, an amino group, or an isocyanate group to both ends of a polyolefin (a1-0) containing a polyolefin of which both ends can be modified as a main component.

The term "main component" as used herein means that the weight of the polyolefin of which both ends can be modified in the total weight of polyolefins is 50% by weight or more (preferably more than 50% by weight) of the total weight of polyolefins.

However, when the weight of the polyolefin of which both ends can be modified is less than 50% by weight of the total weight of polyolefins as well, in a case where the sum of the weight of the polyolefin of which both ends can be modified and the weight of the polyolefin of which one end can be modified as described later is 50% by weight or more of the total weight of polyolefins and the weight of the polyolefin of which both ends can be modified is greater than or equal to the weight of the polyolefin of which one end can be modified, this polyolefin is defined as the polyolefin (a1-0).

The polyolefin (a1-0) includes those obtained by polymerization methods and those obtained by degradation methods.

Examples of the polyolefins obtained by polymerization methods include polyolefins, which are obtained by (co)polymerization ["(co)polymerization" means polymerization or copolymerization, the same applies hereinafter] of one of or a mixture of two or more of C2-C30 olefins (preferably C2-C12 olefins, more preferably C2-C10 olefins) and contain constituent units derived from propylene at 30 mol% or more.

Examples of the polyolefins obtained by degradation methods include polyolefins obtained by mechanically, thermally, or chemically degrading polyolefins having a high molecular weight [preferably a number average molecular weight (hereinafter abbreviated as Mn) of 10,000 to 150,000].

Of these, polyolefins obtained by degradation methods are preferable and polyolefins obtained by thermal degradation are more preferable from the viewpoint of ease of modification during introduction of a carboxy group, a carboxylic anhydride group, a hydroxy group, an amino group or an isocyanate group and availability. By thermal degradation, a low molecular weight polyolefin having 1 to 2 terminal double bonds per molecule are easily obtained, and this low molecular weight polyolefin has a carbon-carbon double bond at the end, and it is thus easy to perform modification through introduction of a carboxy group, a carboxylic anhydride group, a hydroxy group, an amino group, an isocyanate group or the like.

The number average molecular weight (Mn) of the polymer in the present invention can be measured by gel permeation chromatography (GPC) under the following conditions.

- Instrument: "HLC-8120" [manufactured by Tosoh Corporation]
- Columns: "TSKgel GMHXL" [manufactured by Tosoh Corporation] (2 columns) and "TSKgel MultiporeHXL-M" [manufactured by Tosoh Corporation] (1 column)
- Sample solution: 0.3% by weight orthodichlorobenzene solution
- Injected solution volume: 100 μl
- Flow rate: 1 ml/min
- Measurement temperature: 135°C
- Detection instrument: refractive index detector
- Reference substance: 12 standard polystyrenes (TSK standard POLYSTYRENE) (molecular weight: 500, 1,050, 2,800, 5,970, 9,100, 18,100, 37,900, 96,400, 190,000, 355,000, 1,090,000, and 2,890,000) [manufactured by Tosoh Corporation]

The polyolefins obtained by thermal degradation are not limited, but include those obtained by heating high molecular weight polyolefins in an inert gas (for example, those obtained through heating at 300°C to 450°C for 0.5 to 10 hours by the method described in JP H3-62804 A) and those thermally degraded through heating in the air.

Examples of the high molecular weight polyolefins used in the thermal degradation method include (co)polymers [Mn is preferably 12,000 to 100,000, more preferably 15,000 to 70,000; melt flow rate (hereinafter abbreviated as MFR, unit: g/10 min) is preferably 0.5 to 150, more preferably 1 to 100] of one of or a mixture of two or more of C2-C30 olefins (preferably C2-C12 olefins, more preferably C2-C10 olefins), which preferably contain a constituent unit derived from propylene in the polyolefin at 30 mol% or more.

Here, MFR is a numerical value representing the melt viscosity of resin, and it means that the melt viscosity is lower as the numerical value is larger. For the measurement of MFR, an extrusion plastometer specified by JIS K6760 is used, and the measurement method conforms to the method prescribed by JIS K7210-1 (2014). For example, in the case of polypropylene, MFR is measured at 230°C and a load of 2.16 kgf.

Examples of the C2-C30 olefins include C2-C30 $\alpha$-olefins and C4-C30 dienes.

Examples of the C2-C30 $\alpha$-olefins include ethylene, propylene, 1-butene, 4-methyl-1-pentene, 1-pentene, 1-octene, 1-decene, 1-dodecene, 1-icosene, and 1-tetracosene.

Examples of the C4-C30 dienes include butadiene, isoprene, cyclopentadiene, and 1,11-dodecadiene.

Of the C2-C30 olefins, from the viewpoint of molecular weight control, ethylene, propylene, C4-C12 $\alpha$-olefins, butadiene, isoprene and mixtures thereof are preferable, ethylene, propylene, C4-C10 $\alpha$-olefins, butadiene and mixtures thereof are more preferable, and ethylene, propylene and mixtures thereof are particularly preferable.

Mn of the polyolefin (a1-0) is preferably 800 to 10,000, more preferably 1,000 to 8,000, particularly preferably 1,200 to 6,000 from the viewpoint of compressive strain and resilience.

Of the polyolefins (a1-0), those having carbon-carbon double bonds at both ends are preferable, the average number of terminal double bonds per molecule of such polyolefins (a1-0) is preferably 1.1 to 2.5, more preferably 1.3 to 2.2, particularly preferably 1.5 to 2.0 from the viewpoint of compressive strain and resilience.

When a method in which a low molecular weight polyolefin is obtained by the thermal degradation method is used, the polyolefins (a1-0) having Mn in the range of 800 to 10,000 and an average number of terminal double bonds per molecule of 1.1 to 2.0 are easily obtained. Thermal degradation conditions are appropriately selected so as to obtain the desired Mn and average number of terminal double bonds.

A polyolefin (a2-0) containing a polyolefin of which one end can be modified as a main component can be obtained by the polymerization method and degradation method described above. Mn of the polyolefin (a2-0) is preferably 800 to 10,000, more preferably 1,000 to 10,000, particularly preferably 1,200 to 6,000 from the viewpoint of compressive strain and resilience.

The term "main component" as used herein means that the weight of the polyolefin of which one end can be modified in the total weight of polyolefins is 50% by weight or more (preferably more than 50% by weight) of the total weight of polyolefins. However, when the weight of the polyolefin of which one end can be modified is less than 50% by weight of the total weight of polyolefins as well, in a case where the sum of the weight of the polyolefin of which one end can be modified and the weight of the polyolefin of which both ends can be modified is 50% by weight or more of the total weight of polyolefins and the weight of the polyolefin of which one end can be modified is greater than or equal to the weight of the polyolefin of which both ends can be modified, this polyolefin is defined as the polyolefin (a2-0).

Of the polyolefins (a2-0), those having carbon-carbon double bonds at one end are preferable, the average number of terminal double bonds per molecule of such polyolefins (a2-0) is preferably 0.5 to 1.4, more preferably 0.6 to 1.3, particularly preferably 0.7 to 1.2, most preferably 0.8 to 1.1 from the viewpoint of compressive strain and resilience.

When a method in which a low molecular weight polyolefin is obtained by the thermal degradation method is used, the polyolefins (a2-0) having Mn in the range of 800 to 10,000 and an average number of terminal double bonds per molecule of 0.5 to 1.4 are easily obtained.

This low molecular weight polyolefin has a carbon-carbon double bond at the end, and it is thus easy to perform modification through introduction of a carboxy group, a carboxylic anhydride group, a hydroxy group, an amino group, an isocyanate group or the like. Thermal degradation conditions are appropriately selected so as to obtain the desired Mn and average number of terminal double bonds.

The polyolefin (a1-0) and polyolefin (a2-0) are generally obtained as a mixture thereof, but the mixture may be used as it is or may be used after being purified and separated. Of these, a mixture is preferable from the viewpoint of manufacturing cost and the like.

Hereinafter, the polyolefins (a1-1) to (a1-5) having a carboxy group, a carboxylic anhydride group, a hydroxy group, an amino group or an isocyanate group at both ends of the polymer will be explained. The polyolefins (a2-1) to (a2-5) having these groups at one end of the polymer can be obtained in the same manner as the respective polyolefins (a1-1) to (a1-5) by replacing the polyolefin (a1-0) with the polyolefin (a2-0).

As the polyolefin (a1-1), for example, a polyolefin (a1-1-1) having a structure in which the ends of the polyolefin (a1-0) are modified with an $\alpha,\beta$-unsaturated carboxylic acid (anhydride), a polyolefin (a1-1-2) having a structure in which the polyolefin (a1-1-1) is secondarily modified with a lactam or an aminocarboxylic acid, a polyolefin (a1-1-3) having a structure in which the polyolefin (a1-0) is modified by oxidation or hydroformylation, a polyolefin (a1-1-4) having a structure in which the polyolefin (a1-1-3) is secondarily modified with a lactam or an aminocarboxylic acid, mixtures of two or more thereof can be used.

The "$\alpha,\beta$-unsaturated carboxylic acid (anhydride)" means $\alpha,\beta$-unsaturated carboxylic acid or anhydride thereof.

The polyolefin (a1-1-1) can be obtained by modifying the polyolefin (a1-0) with an $\alpha,\beta$-unsaturated carboxylic acid (anhydride).

The $\alpha,\beta$-unsaturated carboxylic acid (anhydride) used for modification includes monocarboxylic acids, dicarboxylic acids, and anhydrides thereof, and specific examples thereof include (meth)acrylic acid, maleic acid (or anhydride thereof), fumaric acid, itaconic acid (or anhydride thereof), and citraconic acid (or anhydride thereof).

Of these, from the viewpoint of ease of modification, dicarboxylic acids and anhydrides of mono- or dicarboxylic acids are preferable, maleic acid (or anhydride thereof) and fumaric acid are more preferable, and maleic acid (or anhydride thereof) is particularly preferable.

The "(meth)acrylic acid" means acrylic acid or methacrylic acid.

The amount of $\alpha,\beta$-unsaturated carboxylic acid (anhydride) used for modification is preferably 0.5% to 200 by weight, more preferably 1% to 15% by weight, particularly preferably 2% to 10% by weight based on the weight of the polyolefin (a1-0) from the viewpoint of compressive strain and resilience.

The modification by an $\alpha,\beta$-unsaturated carboxylic acid (anhydride) can be carried out, for example, through the addition reaction (ene reaction) of an $\alpha,\beta$-unsaturated carboxylic acid (anhydride) to the terminal double bond of the polyolefin (a1-0) by either of a solution method or a fusion method. The reaction temperature is preferably 170°C to 230°C.

Regarding the polyolefin (a1-1-2) having a structure in which the polyolefin (a1-1-1) is secondarily modified with a lactam or an aminocarboxylic acid, examples of the lactam used for secondary modification include C6-C12 lactams, such as caprolactam and laurolactam, and examples of the aminocarboxylic acid include C6-C12 aminocarboxylic acids, such as ω-aminocaproic acid, ω-aminocaprylic acid, ω-aminocapric acid, 11-aminoundecanoic acid, and 12-aminododecanoic acid.

Of these, caprolactam and 12-aminododecanoic acid are preferable.

The acid value (unit: mgKOH/g) of the polyolefin (a1-1) is preferably 4 to 100 mgKOH/g, more preferably 4 to 50 mgKOH/g, particularly preferably 10 to 50 mgKOH/g from the viewpoint of reactivity with the polyalkylene glycol (b) and ease of structure control of the block polymer (X) for a shoe sole [hereinafter sometimes abbreviated as block polymer (X)].

The acid value in the present invention is measured through titration using a KOH/methanol solution containing phenolphthalein as an indicator. The acid value is measured as the half-esterification acid value after half-esterification with methanol when the acid group is a carboxylic anhydride group.

As the polyolefin (a1-2), polyolefins having a hydroxy group, which are obtained by modifying the polyolefin (a1-1) with hydroxy group-containing amines, and mixtures of two or more thereof can be used.

Examples of the hydroxy group-containing amines, which can be used for modification, include C2-C10 hydroxy group-containing amines, and specific examples thereof include 2-aminoethanol, 3-aminopropanol, 1-amino-2-propanol, 4-aminobutanol, 5-aminopentanol, 6-aminohexanol, and 3-aminomethyl-3,5,5-trimethylcyclohexanol.

Of these, from the viewpoint of ease of modification, C2-C6 hydroxy group-containing amines (such as 2-aminoethanol, 3-aminopropanol, 4-aminobutanol, 5-aminopentanol, and 6-aminohexanol) are preferable, 2-aminoethanol and 4-aminobutanol are more preferable, and 2-aminoethanol is particularly preferable.

The amount of hydroxy group-containing amines, which are used for modification, is preferably 0.5% to 20% by weight, more preferably 1% to 15% by weight, particularly preferably 2% to 10% by weight based on the weight of the polyolefin (a1-1) from the viewpoint of compressive strain and resilience.

The hydroxyl value of the polyolefin (a1-2) is preferably 10 to 120 mgKOH/g, more preferably 15 to 110 mgKOH/g, particularly preferably 20 to 100 mgKOH/g from the viewpoint of reactivity with the polyalkylene glycol (b) and ease of structure control of the block polymer (X).

As the polyolefin (a1-3), polyolefins having an amino group, which are obtained by modifying the polyolefin (a1-1) with diamines, and mixtures of two or more thereof can be used.

Examples of the diamines include C2-C12 aliphatic diamines [for example, linear diamines (such as ethylenediamine, 1,2-diaminopropane, 1,3-diaminopropane, 1,2-, 1,3- or 2,3-diaminobutane, 1,4-diaminobutane, 1,5-diaminopentane, 1,6-diaminohexane, 1,7-diaminoheptane, 1,8-diaminooctane, and 1,10-diaminodecane) and diamines having branched alkyl chains (such as 1,5-diamino-3-methylpentane and 1,3-diamino-2,2-diethylpropanediamine)] and C6-C20 alicyclic diamines [for example, 1,4-diaminocyclohexane, 1,4-bis(aminomethyl)cyclohexane, and 2,2-bis(4-aminocyclohexyl)propane].

Of these, from the viewpoint of ease of modification, C2-C8 diamines are preferable, ethylenediamine, 1,6-diaminohexane, 1,7-diaminoheptane and 1,8-diaminooctane are more preferable, and ethylenediamine and 1,6-diaminohexane are particularly preferable, and ethylenediamine is most preferable.

The amount of the diamine used for modification of the polyolefin (a1-1) is preferably 0.5% to 20% by weight, more preferably 1% to 15% by weight, particularly preferably 2% to 10% by weight based on the weight of the polyolefin (a1-1) from the viewpoint of compressive strain and resilience. For modification of the polyolefin (a1-1) with a diamine, from the viewpoint of preventing the crosslinking reaction between polymer molecules, a method is preferable in which a diamine is used at preferably 0.50 to 1,000% by weight, more preferably 1% to 500% by weight, particularly preferably 2% to 300% by weight based on the weight of the polyolefin (a1-1) and then the unreacted diamine is removed at 120°C to 230°C under reduced pressure.

The amine value of the polyolefin (a1-3) is preferably 10 to 120 mgKOH/g, more preferably 15 to 110 mgKOH/g, particularly preferably 20 to 100 mgKOH/g from the viewpoint of compressive strain and resilience.

Examples of the polyolefin (a1-4) include polyolefins having an isocyanate group, which are obtained by modifying the polyolefin (a1-2) with a polyisocyanate (a compound having two or more isocyanate (NCO) groups), and mixtures of two or more thereof.

The polyisocyanate includes C6-C20 (carbon atom in the isocyanate group is not counted, the same applies hereinafter) aromatic polyisocyanates, C2-C18 aliphatic polyisocyanates, C4-C15 alicyclic polyisocyanates, C8-C15 araliphatic polyisocyanates, modified products of these polyisocyanates, and mixtures of two or more thereof.

Examples of the aromatic polyisocyanates include 1,3- or 1,4-phenylene diisocyanate, 2,4- or 2,6-tolylene diisocyanate (TDI), crude TDI, 2,4'- or 4,4'-diphenylmethane diisocyanate (MDI), 4,4'-diisocyanatobiphenyl, 3,3'-dimethyl-4,4'-diisocyanatobiphenyl, 3,3'-dimethyl-4,4'-diisocyanatodiphenylmethane, and 1,5-naphthylene diisocyanate.

Examples of the aliphatic polyisocyanates include ethylene diisocyanate, tetramethylene diisocyanate, hexamethylene diisocyanate (HDI), dodecamethylene diisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate, and 2-isocyanatoethyl-2,6-diisocyanatohexanoate.

Examples of the alicyclic polyisocyanates include isophorone diisocyanate (IPDI), dicyclohexylmethane-4,4'-diisocyanate (hydrogenated MDI), cyclohexylene diisocyanate, methylcyclohexylene diisocyanate (hydrogenated TDI), bis(2-isocyanatoethyl)-4-cyclohexene-1,2-dicarboxylate, and 2,5- or 2,6-norbornane diisocyanate.

Examples of the araliphatic polyisocyanates include m- or p-xylylene diisocyanate (XDI) and $\alpha,\alpha,\alpha',\alpha'$-tetramethylxylylene diisocyanate (TMXDI).

Examples of the modified products of polyisocyanates include urethane modified products, urea modified products, carbodiimide modified products, and uretdione modified products.

Of the polyisocyanates, TDI, MDI, and HDI are preferable and HDI is more preferable.

The reaction of a polyisocyanate with the polyolefin (a1-2) can be conducted in the same manner as a general urethanization reaction.

The equivalent ratio (NCO:OH) of the isocyanate groups of the polyisocyanate to the hydroxy groups of the polyolefin (a1-2) is preferably within a range of 1.8:1 to 3:1, more preferably 2:1.

In order to promote the urethanization reaction, a catalyst generally used for urethanization reactions may be used, if necessary. Examples of the catalyst include metal catalysts {for example, tin catalysts [for example, dibutyltin dilaurate and stannous octoate], lead catalysts [for example, lead 2-ethylhexanoate and lead octanoate], and other metal catalysts [for example, naphthenic acid metal salts (such as cobalt naphthenate) and phenylmercury propionate]}; and amine catalysts {for example, triethylenediamine, diazabicycloalkenes [such as 1,8-diazabicyclo[5,4,0]undecene-7], dialkylaminoalkylamines (such as dimethylaminoethylamine and dimethylaminooctylamine), carbonic acid salts or organic acid (such as formic acid) salts of heterocyclic aminoalkylamines [such as 2-(1-aziridinyl)ethylamine and 4-(1-piperidinyl)-2-hexylamine], N-methyl or ethylmorpholine, triethylamine, and diethyl- or dimethylethanolamine}; and combinations of two or more thereof.

The amount of the catalyst used is preferably 3% by weight or less, more preferably 0.001% to 2% by weight based on the total weight of polyisocyanate and polyolefin (a1-2).

As the polyolefin (a1-5), a polyolefin (a1-5-1) having a structure in which a polyolefin having a structure in which both ends of the polyolefin (a1-0) are each modified with an $\alpha,\beta$-unsaturated carboxylic anhydride is secondarily modified with a diolamine can be used.

Examples of the diolamine used for secondary modification include diethanolamine.

Mn of the polyolefin (a) is preferably 1,000 to 10,000, more preferably 1,500 to 8,500, particularly preferably 2,000 to 7,000 from the viewpoint of compressive strain and resilience.

The polyolefin (a) contains propylene and ethylene as constituent monomers, and the weight ratio of propylene to ethylene (propylene/ethylene) is within a range of 90/10 to 99.5/0.5, preferably 96/4 to 98/2. In a case where the weight ratio (propylene/ethylene) is less than 90/10 or more than 99.5/0.5, the resilience is poor.

The weight ratio (propylene/ethylene) tends to directly reflect the weight ratio of the constituent monomers of the high molecular weight polyolefin and the constituent monomers used in the above-mentioned polymerization methods, and a desired weight ratio can be thus obtained by appropriately adjusting the weight ratio of the constituent monomers.

As the polyolefin (a), a propylene/ethylene copolymer is preferable from the viewpoint of resilience.

Of the polyolefins (a), the polyolefin (a1-1) is preferable and the polyolefin (a1-1-2) is more preferable in industry from the viewpoint of compressive strain and resilience.

<Polyalkylene glycol (b)>

The polyalkylene glycol (b) in the present invention contains a C3-C4 alkylene glycol as a constituent monomer. The alkylene glycol preferably has 4 carbon atoms.

Examples of the polyalkylene glycol (b) include polytetramethylene glycol, polypropylene glycol, and terminal-modified products (amino group modified products, glycidyl etherified products) thereof.

Of these, from the viewpoint of productivity of the block polymer (X), those having a hydroxy group at least at one end of the polymer main chain are preferable.

The polyalkylene glycol (b) is obtained by a known production method (polymerization of tetrahydrofuran or propylene oxide in the presence of a catalyst). Modified products thereof are also obtained by known production methods. The polyalkylene glycol (b) may be obtained by the above method or a commercially available product may be used.

The number average molecular weight (Mn) of the polyalkylene glycol (b) is preferably 500 to 4,000, more preferably 750 to 3,000, particularly preferably 1,000 to 3,000 from the viewpoint of compressive strain and resilience.

<Block polymer (X) for shoe sole>

The block polymer (X) for a shoe sole of the present invention contains the polyolefin (a) and the polyalkylene glycol (b) as constituent units. The polyolefin (a) and polyalkylene glycol (b) constituting the block polymer (X) may each be one or two or more.

The Mn of the block of polyolefin (a) is preferably 1,000 to 10,000, more preferably 1,500 to 8,500, particularly preferably 2,000 to 7,000 from the viewpoint of compressive strain and resilience.

The Mn of the block of polyalkylene glycol (b) is preferably 500 to 4,000, more preferably 750 to 3,000, particularly preferably 1,000 to 3,000 from the viewpoint of compressive strain and resilience.

The structure in which the block of polyolefin (a) and the block of polyalkylene glycol (b) constituting the block polymer (X) are bonded to each other includes an (a)-(b) type, an (a)-(b)-(a) type, a (b)-(a)-(b) type, and an $[(a)-(b)]_n$ type (n represents the average number of repetitions).

The block polymer (X) can be produced, for example, by reacting the polyolefin (a1-1) with the polyalkylene glycol (b).

In a case where the block polymer (X) has a structure in which the block of polyolefin (a) and the block of polyalkylene glycol (b) are bonded to each other by an amide bond, an imide bond, or an ester bond, the block polymer (X) can be produced by, for example, placing the polyolefin (a) and the polyalkylene glycol (b) in a reaction vessel and conducting the amidation reaction, imidization reaction, or esterification reaction thereof for 1 to 50 hours under stirring at a reaction temperature of 100°C to 250°C and a pressure of 0.1 MPa or less while removing water generated by the reaction from the reaction system.

From the viewpoint of compressive strain and resilience, the block polymer (X) preferably contains a crosslinking agent (K) to be described later as a constituent unit. In that case, the block polymer (X) has a structure in which at least one of the polyolefin (a) or the polyalkylene glycol (b) is crosslinked with the crosslinking agent (K). The block polymer (X) preferably contains a structure crosslinked with the crosslinking agent (K) including at least three functional groups capable of reacting with the functional group at the end of at least one of the polyolefin (a) or the polyalkylene glycol (b).

The weight ratio of the block of polyolefin (a) to the block of polyalkylene glycol (b) [(a)/(b)] constituting the block polymer (X) is preferably within a range of 20/80 to 80/20, more preferably 25/75 to 75/25, particularly preferably 30/70 to 70/30 from the viewpoint of compressive strain and resilience.

The Mn of the block polymer (X) is preferably 5,000 to 150,000, more preferably 10,000 to 100,000, particularly preferably 20,000 to 80,000.

The block polymer (X) for a shoe sole of the present invention can be suitably used as a raw material resin for various shoe soles (outsoles, midsoles).

<Crosslinking agent (K)>

The crosslinking agent (K) in the present invention is a compound capable of crosslinking at least one of the polyolefin (a) or the polyalkylene glycol (b), and is preferably a compound including at least three functional groups capable of reacting with the functional group at the end of at least one of the polyolefin (a) or the polyalkylene glycol (b).

As the crosslinking agent (K), a compound including at least three functional groups (for example, a carboxy group, an amino group, an epoxy group, and a hydroxy group) capable of reacting with a hydroxy group and/or a carboxy group is preferable. Of these functional groups, a carboxy group is preferable from the viewpoint of reactivity.

Examples of the crosslinking agent (K) include a trivalent or higher polycarboxylic acid (K1), a trivalent or higher polyepoxide (K2), a trivalent or higher polyamine (K3), and a trivalent or higher polyol (K4).

Examples of the trivalent or higher polycarboxylic acid (K1) include trimesic acid, trimellitic acid, pyromellitic acid, hexanetricarboxylic acid, decanetricarboxylic acid, and acid anhydrides thereof and alkyl (C1-C2 alkyl) esters thereof.

Examples of the trivalent or higher polyepoxide (K2) include triglycidyl ether of trimethylolpropane.

Examples of the trivalent or higher polyamine (K3) include triethylenetetramine.

Examples of the trivalent or higher polyol (K4) include triethanolamine.

Of the crosslinking agents (K), from the viewpoint of reactivity and compressive strain, the trivalent or higher polycarboxylic acid (K1) is preferable and trimellitic anhydride is more preferable.

When a crosslinked structure is introduced into the block polymer (X), the crosslinking agent (K) may be added at any timing before, during, or after the reaction of the polyolefin (a) with the polyalkylene glycol (b).

As the amount of the crosslinking agent (K), from the viewpoint of compressive strain and resilience, the molar ratio of the crosslinking agent (K) to the sum of the polyolefin (a) and polyalkylene glycol (b) {(K)/[(a)+(b)]} is preferably within a range of 3/97 to 35/65, more preferably 5/95 to 15/85.

<Resin composition (Y) for shoe sole>

A resin composition (Y) for a shoe sole of the present invention [hereinafter sometimes abbreviated as resin composition (Y)] contains the block polymer (X) for a shoe sole of the present invention and a thermoplastic resin (E) other than the block polymer (X).

Examples of the thermoplastic resin (E) include a polyolefin resin (E1), a polystyrene resin (E2), an acrylic resin (E3), a polyamide resin (E4), a polyester resin (E5), a polyacetal resin (E6), a polycarbonate resin (E7), and a polyurethane resin (E8).

Of the thermoplastic resins (E), the polyolefin resin (E1) is preferable from the viewpoint of compressive strain and resilience.

The number average molecular weight (Mn) of the thermoplastic resin (E) is preferably 7,000 to 500,000, more preferably 10,000 to 200,000.

The weight ratio of the block polymer (X) for a shoe sole to the thermoplastic resin (E) other than the block polymer (X) [(X)/(E)] is preferably within a range of 60/40 to 95/5, more preferably 75/25 to 90/10.

The block polymer (X) for a shoe sole and the resin composition (Y) for a shoe sole may contain additives (D), such as a coloring agent (D1) (such as azo pigment), a mold release agent (D2) (such as liquid paraffin), an antioxidant (D3) (such as triphenyl phosphite), a flame retardant (D4) (such as antimony trioxide), an ultraviolet absorber (D5) (such as phenyl salicylate), an antibacterial agent (D6) (such as benzimidazole), a compatibilizer (D7) (such as modified vinyl copolymer), a filler (D8) (such as calcium carbide), and a transesterification inhibitor (D9) (such as monooctadecyl phosphate), in a range in which the effects of the present invention are not impeded. The additives may each be used singly or in combination of two or more.

The total content of the additives (D) based on the weight of the block polymer (X) for a shoe sole or the resin composition (Y) for a shoe sole is generally 45% by weight or less, is preferably 0.001% to 40% by weight, more preferably 0.01% to 35% by weight from the viewpoint of the effects of the respective additives and the mechanical strength of the molded product; and as the contents of the respective additives (D), from the same point of view, the content of the coloring agent (D1) is preferably 0.1% to 3% by weight, more preferably 0.2% to 2% by weight; the content of the mold release agent (D2) is preferably 0.01% to 3% by weight, more preferably 0.05% to 1% by weight; the content of the antioxidant (D3) is preferably 0.01% to 3% by weight, more preferably 0.05% to 1% by weight; the content of the flame retardant (D4) is preferably 0.5% to 20% by weight, more preferably 1% to 10% by weight; the content of the ultraviolet absorber (D5) is preferably 0.01% to 3% by weight, more preferably 0.05% to 1% by weight; the content of the antibacterial agent (D6) is preferably 0.5% to 20% by weight, more preferably 1% to 100 by weight; the content of the compatibilizer (D7) is preferably 0.5% to 10% by weight, more preferably 1% to 5% by weight; the content of the filler (D8) is preferably 0.5% to 10% by weight, more preferably 1% to 5% by weight; and the content of the transesterification inhibitor (D9) is preferably 0.01% to 3% by weight, more preferably 0.05% to 1% by weight.

<Shoe sole (Z)>

A shoe sole (Z) of the present invention is a molded foam of the block polymer (X) for a shoe sole or a molded foam of the resin composition (Y) for a shoe sole.

The density of the shoe sole (Z) is preferably 0.20 to 0.90 $g/cm^3$, more preferably 0.30 to 0.80 $g/cm^3$.

In the present invention, the density is a value measured at 23°C in conformity with ASTM D1505.

The shoe sole (Z) of the present invention can be fabricated by, for example, mixing the block polymer (X) for a shoe sole or the resin composition (Y) for a shoe sole using an open roll and then foam-molding the mixture. After foam molding, further processing may be performed, if necessary.

The molding temperature during foam molding is, for example, 150°C to 220°C.

A blowing agent (C) may be used at the time of foam molding. Examples of the blowing agent (C) include azodicarbonamide (ADCA), azobisisobutyronitrile (AIBN), and dinitrosopentamethylenetetramine (DPT).

The weight ratio of the block polymer (X) to the blowing agent (C) [(X)/(C)] and the weight ratio of the resin composition (Y) to the blowing agent (C) [(Y)/(C)] vary depending on the desired density, but both are preferably within a range of 90/10 to 99/1, more preferably 93/7 to 99/2.

The block polymer (X) for a shoe sole of the present invention can be suitably used as a raw material resin for various shoe soles (outsoles, midsoles). The shoe sole (Z) fabricated using the block polymer (X) for a shoe sole exhibits small compressive strain, excellent durability, and excellent resilience (a low loss coefficient, a small change in resilience depending on the temperature), and is thus useful as a midsole or an outsole.

The following items are disclosed in this specification.

(1) A block polymer (X) for a shoe sole, containing as constituent units:

a block of polyolefin (a) below; and
a block of polyalkylene glycol (b) below,
the polyolefin (a) containing propylene and ethylene as constituent monomers with a weight ratio of propylene to ethylene (propylene/ethylene) within a range of 90/10 to 99.5/0.5, and
the polyalkylene glycol (b) containing C3-C4 alkylene glycol as a constituent monomer.

(2) The block polymer (X) for a shoe sole according to (1),
wherein the block of polyolefin (a) has a number average molecular weight of 1,000 to 10,000.
(3) The block polymer (X) for a shoe sole according to (1) or (2),
wherein the block of polyalkylene glycol (b) has a number average molecular weight of 500 to 4,000.
(4) The block polymer (X) for a shoe sole according to any one of (1) to (3),
wherein a weight ratio of the block of polyolefin (a) to the block of polyalkylene glycol (b) [(a)/(b)]is within a range of 20/80 to 80/20.
(5) The block polymer (X) for a shoe sole according to any one of (1) to (4),
wherein the block polymer (X) for a shoe sole contains a structure crosslinked with a crosslinking agent (K) including at least three functional groups capable of reacting with a functional group at an end of at least one of polyolefin (a) or polyalkylene glycol (b).
(6) The block polymer (X) for a shoe sole according to any one of (1) to (5),
wherein the block polymer (X) for a shoe sole has a number average molecular weight of 5,000 to 150,000.
(7) A resin composition (Y) for a shoe sole, containing:

the block polymer (X) for a shoe sole according to any one of (1) to (6); and
a thermoplastic resin (E) other than the block polymer (X) for a shoe sole.

(8) A shoe sole (Z) that is a molded foam of the block polymer (X) for a shoe sole according to any one of (1) to (6) or a molded foam of the resin composition (Y) for a shoe sole according to (7).
(9) The shoe sole (Z) according to (8),
wherein the shoe sole (Z) has a density of 0.20 to 0.90 $g/cm^3$.

EXAMPLES

Hereinafter, the present invention will be further explained with reference to Examples and Comparative Examples, but the present invention is not limited thereto. Hereinafter, parts refer to parts by weight unless otherwise specified.

<Production Example 1> [Production of polyolefin (a-1)]

A reaction vessel was charged with 1000 parts of a polyolefin containing propylene at 98% by weight and ethylene at 2% by weight as constituent units [trade name "SunAllomer PZA20A", manufactured by SunAllomer Ltd., Mn 100,000, the same hereinafter]. They were heated and melted using a mantle heater while nitrogen was aerated into the liquid phase, and subjected to thermal degradation at 380°C for 70 minutes with stirring. Thereby, a polyolefin (a1-0-1) having a carbon-carbon double bond at each end [Mn: 2,500] was obtained.

Next, 100 parts of the polyolefin (a1-0-1) was melted in a reaction vessel at 160°C, 14.1 parts of maleic anhydride was placed, the reaction was conducted under nitrogen at 200°C for 10 hours, and excess maleic anhydride was removed under reduced pressure.

Next, 15.5 parts of 12-aminododecanoic acid was placed, and the reaction was conducted at 200°C for one hour to obtain a polyolefin (a-1). The polyolefin (a-1) had an acid value of 33.0 and Mn of 3,000.

<Production Example 2> [Production of polyolefin (a-2)]

A polyolefin (a-2) was obtained by conducting a reaction as in Production Example 1 except that the amount of 12-aminododecanoic acid added was changed to 12.4 parts. The polyolefin (a-2) had an acid value of 33.4 and Mn of 3, 000 .

<Production Example 3> [Production of polyolefin (a-3)]

A polyolefin (a-3) was obtained by conducting a reaction as in Production Example 1 except that the amount of 12-aminododecanoic acid added was changed to 9.3 parts. The polyolefin (a-3) had an acid value of 34.2 and Mn of 2, 900.

<Production Example 4> [Production of polyolefin (a-4)]

A reaction vessel was charged with 1000 parts of a polyolefin containing propylene at 98% by weight and ethylene at 2% by weight as constituent units ["SunAllomer PZA20A" described above]. They were heated and melted using a mantle heater while nitrogen was aerated into the liquid phase, and subjected to thermal degradation at 380°C for 90 minutes with stirring. Thereby, a polyolefin (a1-0-2) having a carbon-carbon double bond at each end [Mn: 1,500] was obtained.

Next, 100 parts of the polyolefin (a1-0-2) was melted in a reaction vessel at 160°C, 23.5 parts of maleic anhydride was placed, the reaction was conducted under nitrogen at 200°C for 10 hours, and excess maleic anhydride was removed under reduced pressure.

Next, 20.7 parts of 12-aminododecanoic acid was placed, and the reaction was conducted at 200°C for one hour to obtain a polyolefin (a-4). The polyolefin (a-4) had an acid value of 51.5 and Mn of 2,000.

<Production Example 5> [Production of polyolefin (a-5)]

A reaction vessel was charged with 1000 parts of a polyolefin containing propylene at 98% by weight and ethylene at 2% by weight as constituent units ["SunAllomer PZA20A" described above]. They were heated and melted using a mantle heater while nitrogen was aerated into the liquid phase, and subjected to thermal degradation at 370°C for 40 minutes with stirring. Thereby, a polyolefin (a1-0-3) having a carbon-carbon double bond at each end [Mn: 6,100] was obtained.

Next, 100 parts of the polyolefin (a1-0-3) was melted in a reaction vessel at 160°C, 5.3 parts of maleic anhydride was placed, the reaction was conducted under nitrogen at 200°C for 10 hours, and excess maleic anhydride was removed under reduced pressure.

Next, 5.8 parts of 12-aminododecanoic acid was placed, and the reaction was conducted at 200°C for one hour to obtain a polyolefin (a-5). The polyolefin (a-5) had an acid value of 14.1 and Mn of 6,600.

<Production Example 6> [Production of polyolefin (a-6)]

A reaction vessel was charged with 1000 parts of a polyolefin containing propylene at 96% by weight and ethylene at 4% by weight as constituent units [trade name "WINTEC WFX6", manufactured by Japan Polypropylene Corporation, Mn 150,000, the same hereinafter]. They were heated and melted using a mantle heater while nitrogen was aerated into the liquid phase, and subjected to thermal degradation at 370°C for 100 minutes with stirring. Thereby, a polyolefin (a1-0-4) having a carbon-carbon double bond at each end [Mn: 2,800] was obtained.

Next, 100 parts of the polyolefin (a1-0-4) was melted in a reaction vessel at 160°C, 12.2 parts of maleic anhydride was placed, the reaction was conducted under nitrogen at 200°C for 10 hours, and excess maleic anhydride was removed under reduced pressure.

Next, 13.4 parts of 12-aminododecanoic acid was placed, and the reaction was conducted at 200°C for one hour to obtain a polyolefin (a-6). The polyolefin (a-6) had an acid value of 29.5 and Mn of 3,300.

<Production Example 7> [Production of polyolefin (a-7)]

A reaction vessel was charged with 1000 parts of a polyolefin containing propylene at 96% by weight and ethylene at 4% by weight as constituent units ["WINTEC WFX6" described above]. They were heated and melted using a mantle heater while nitrogen was aerated into the liquid phase, and subjected to thermal degradation at 370°C for 40 minutes with stirring. Thereby, a polyolefin (a1-0-5) having a carbon-carbon double bond at each end [Mn: 6,700] was obtained.

Next, 100 parts of the polyolefin (a1-0-5) was melted in a reaction vessel at 160°C, 4.9 parts of maleic anhydride was placed, the reaction was conducted under nitrogen at 200°C for 10 hours, and excess maleic anhydride was removed under reduced pressure.

Next, 5.4 parts of 12-aminododecanoic acid was placed, and the reaction was conducted at 200°C for one hour to obtain a polyolefin (a-7). The polyolefin (a-7) had an acid value of 13.1 and Mn of 7,200.

<Example 1>

A stainless steel pressure resistant reaction vessel equipped with a stirrer, a thermometer, a heating and cooling machine, a nitrogen introduction pipe, and a pressure reducing machine was charged with 159 parts of the polyolefin (a-1), 140 parts of polytetramethylene glycol (b-1) (PTMG, Mn: 3,000), 0.3 parts of an antioxidant [trade name "Irganox 1010", manufactured by BASF Japan Co., Ltd.], and 0.6 parts of dibutyltin oxide, and polymerization was carried out at 220°C under reduced pressure of 0.13 kPa or less for six hours with stirring. Thereby, a block polymer (X-1) for a shoe sole (Mn: 37,000) was obtained.

<Example 2>

A stainless steel pressure resistant reaction vessel equipped with a stirrer, a thermometer, a heating and cooling machine, a nitrogen introduction pipe, and a pressure reducing machine was charged with 157 parts of the polyolefin (a-2), 142 parts of the polytetramethylene glycol (b-1), 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-2) for a shoe sole (Mn: 46,000) was obtained.

<Example 3>

A stainless steel pressure resistant reaction vessel equipped with a stirrer, a thermometer, a heating and cooling machine, a nitrogen introduction pipe, and a pressure reducing machine was charged with 155 parts of the polyolefin (a-3), 144 parts of the polytetramethylene glycol (b-1), 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-3) for a shoe sole (Mn: 65,000) was obtained.

<Example 4>

A stainless steel pressure resistant reaction vessel equipped with a stirrer, a thermometer, a heating and cooling machine, a nitrogen introduction pipe, and a pressure reducing machine was charged with 153 parts of the polyolefin (a-1), 142 parts of the polytetramethylene glycol (b-1), 4.3 parts of trimellitic anhydride, 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-4) for a shoe sole (Mn: 51,000) was obtained.

<Example 5>

A stainless steel pressure resistant reaction vessel equipped with a stirrer, a thermometer, a heating and cooling machine, a nitrogen introduction pipe, and a pressure reducing machine was charged with 157 parts of the polyolefin (a-4), 142 parts of polytetramethylene glycol (b-2) (PTMG, Mn: 2,000), 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-5) for a shoe sole (Mn: 41,000) was obtained.

<Example 6>

A stainless steel pressure resistant reaction vessel equipped with a stirrer, a thermometer, a heating and cooling machine, a nitrogen introduction pipe, and a pressure reducing machine was charged with 127 parts of the polyolefin (a-4), 173 parts of the polytetramethylene glycol (b-1), 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-6) for a shoe sole (Mn: 47,000) was obtained.

<Example 7>

A stainless steel pressure resistant reaction vessel equipped with a stirrer, a thermometer, a heating and cooling machine, a nitrogen introduction pipe, and a pressure reducing machine was charged with 206 parts of the polyolefin (a-2), 93 parts of polytetramethylene glycol (b-3) (PTMG, Mn: 1,500), 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-7) for a shoe sole (Mn: 47,000) was obtained.

<Example 8>

A stainless steel pressure resistant reaction vessel equipped with a stirrer, a thermometer, a heating and cooling machine, a nitrogen introduction pipe, and a pressure reducing machine was charged with 146 parts of the polyolefin (a-1), 152 parts of the polytetramethylene glycol (b-1), 0.9 parts of trimellitic anhydride, 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-8) for a shoe sole (Mn: 41,000) was obtained.

<Example 9>

A stainless steel pressure resistant reaction vessel equipped with a stirrer, a thermometer, a heating and cooling machine, a nitrogen introduction pipe, and a pressure reducing machine was charged with 133 parts of the polyolefin (a-1), 164 parts of the polytetramethylene glycol (b-1), 1.9 parts of trimellitic anhydride, 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-9) for a shoe sole (Mn: 46,000) was obtained.

<Example 10>

A stainless steel pressure resistant reaction vessel equipped with a stirrer, a thermometer, a heating and cooling machine, a nitrogen introduction pipe, and a pressure reducing machine was charged with 207 parts of the polyolefin (a-5), 91 parts of the polytetramethylene glycol (b-1), 0.6 parts of trimellitic anhydride, 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-10) for a shoe sole (Mn: 40,000) was obtained.

<Example 11>

A stainless steel pressure resistant reaction vessel equipped with a stirrer, a thermometer, a heating and cooling machine, a nitrogen introduction pipe, and a pressure reducing machine was charged with 231 parts of the polyolefin (a-5), 68 parts of the polytetramethylene glycol (b-2), 0.6 parts of trimellitic anhydride, 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-11) for a shoe sole (Mn: 36,000) was obtained.

<Example 12>

A stainless steel pressure resistant reaction vessel equipped with a stirrer, a thermometer, a heating and cooling machine, a nitrogen introduction pipe, and a pressure reducing machine was charged with 167 parts of the polyolefin (a-6), 132 parts of the polytetramethylene glycol (b-1), 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-12) for a shoe sole (Mn: 37,000) was obtained.

<Example 13>

A stainless steel pressure resistant reaction vessel equipped with a stirrer, a thermometer, a heating and cooling machine, a nitrogen introduction pipe, and a pressure reducing machine was charged with 155 parts of the polyolefin (a-6), 143 parts of the polytetramethylene glycol (b-1), 0.9 parts of trimellitic anhydride, 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-13) for a shoe sole (Mn: 39,000) was obtained.

<Example 14>

A stainless steel pressure resistant reaction vessel equipped with a stirrer, a thermometer, a heating and cooling machine, a nitrogen introduction pipe, and a pressure reducing machine was charged with 143 parts of the polyolefin (a-6), 155 parts of the polytetramethylene glycol (b-1), 1.8 parts of trimellitic anhydride, 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-14) for a shoe sole (Mn: 47,000) was obtained.

<Example 15>

A stainless steel pressure resistant reaction vessel equipped with a stirrer, a thermometer, a heating and cooling machine, a nitrogen introduction pipe, and a pressure reducing machine was charged with 129 parts of the polyolefin (a-6), 167 parts of the polytetramethylene glycol (b-1), 2.8 parts of trimellitic anhydride, 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-15) for a shoe sole (Mn: 53,000) was obtained.

<Example 16>

A stainless steel pressure resistant reaction vessel equipped with a stirrer, a thermometer, a heating and cooling machine, a nitrogen introduction pipe, and a pressure reducing machine was charged with 212 parts of the polyolefin (a-7), 87 parts of the polytetramethylene glycol (b-1), 0.5 parts of trimellitic anhydride, 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-16) for a shoe sole (Mn: 34,000) was obtained.

<Example 17>

A stainless steel pressure resistant reaction vessel equipped with a stirrer, a thermometer, a heating and cooling machine, a nitrogen introduction pipe, and a pressure reducing machine was charged with 146 parts of the polyolefin (a-1), 152 parts of polypropylene glycol (b-4) (PPG, Mn: 3,000), 0.9 parts of trimellitic anhydride, 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-17) for a shoe sole (Mn: 40,000) was obtained.

<Example 18>

A stainless steel pressure resistant reaction vessel equipped with a stirrer, a thermometer, a heating and cooling machine, a nitrogen introduction pipe, and a pressure reducing machine was charged with 221 parts of the polyolefin (a-1), 77 parts of polypropylene glycol (b-5) (PPG, Mn: 1,000), 1.4 parts of trimellitic anhydride, 0.3 parts of an antioxidant ["Irganox 1010" described above], and 0.6 parts of dibutyltin oxide, and polymerization was carried out at 220°C under reduced pressure of 0.13 kPa or less for six hours with stirring. Thereby, a block polymer (X-18) for a shoe sole (Mn: 37,000) was obtained.

<Example 19>

Using a twin-screw extruder, 90 parts of the block polymer (X-1) obtained in Example 1 and 10 parts of a polyolefin resin (E-1) [propylene homopolymer, trade name "PM801A", manufactured by SunAllomer Ltd.] were kneaded at 190°C and a retention time of 30 seconds and pelletized to obtain a resin composition (Y-19) for a shoe sole.

<Example 20>

Using a twin-screw extruder, 70 parts of the block polymer (X-1) obtained in Example 1 and 30 parts of the polyolefin resin (E-1) were kneaded at 190°C and a retention time of 30 seconds and pelletized to obtain a resin composition (Y-20) for a shoe sole.

<Example 21>

Using a twin-screw extruder, 90 parts of the block polymer (X-1) obtained in Example 1 and 10 parts of a polyolefin resin (E-2) [polyolefin containing propylene at 96% by weight and ethylene at 4% by weight as constituent units, "WINTEC WFX6"] were kneaded at 190°C and a retention time of 30 seconds and pelletized to obtain a resin composition (Y-21) for a shoe sole.

<Example 22>

Using a twin-screw extruder, 70 parts of the block polymer (X-1) obtained in Example 1 and 30 parts of a polyolefin resin (E-2) were kneaded at 190°C and a retention time of 30 seconds and pelletized to obtain a resin composition (Y-22) for a shoe sole.

<Example 23>

Using a twin-screw extruder, 70 parts of the block polymer (X-8) obtained in Example 8 and 30 parts of the polyolefin resin (E-1) were kneaded at 190°C and a retention time of 30 seconds and pelletized to obtain a resin composition (Y-23) for a shoe sole.

<Example 24>

Using a twin-screw extruder, 70 parts of the block polymer (X-13) obtained in Example 13 and 30 parts of the polyolefin resin (E-2) were kneaded at 190°C and a retention time of 30 seconds and pelletized to obtain a resin composition (Y-24) for a shoe sole.

<Comparative Example 1>

A commercially available EVA resin (manufactured by Mitsui Chemicals, Inc., trade name "EVAFLEX 270") was used as a block polymer for comparison.

<Example 31>

After 100 parts of the block polymer (X-1) for a shoe sole and 4 parts of a blowing agent (C-1) were mixed using an open roll, foam molding was performed at 160°C and 15 MPa to obtain a shoe sole (Z-1). Evaluation was performed on the obtained shoe sole (Z-1).

<Examples 32 to 54 and Comparative Example 2>

The respective shoe soles (Z-2) to (Z-24) and (comparative Z-1) were obtained as in Example 31 except that the raw material compositions (parts) in Table 1 or Table 2 were adopted. In Comparative Example 2, the EVA resin of Comparative Example 1 was used. The results are shown in Tables 1 and 2.

<Evaluation>

(1) Density

The density (g/cm$^3$) was determined at 23°C in conformity with ASTM D1505.

(2) Compressive strain

The test was conducted five times in total, with one test in which a load of 10 kgf/cm$^2$ was applied to the obtained sole (5 cm long × 5 cm wide × 5 cm high) at 50°C for 20 hours and removed for 4 hours. The height before the test was denoted as L0, the height after the test was denoted as L5, and the compressive strain was calculated by the following equation and evaluated according to the following evaluation criteria.

$$\text{Compressive strain (\%)} = (L0 - L5) \times 100/L0$$

[Evaluation criteria]

Excellent: Compressive strain of less than 100
Favorable: Compressive strain of 100 or more and less than 150
Acceptable: Compressive strain of 150 or more and less than 200
Poor: Compressive strain of 200 or more

(3) Resilience

A sample was taken from the obtained sole, the dynamic viscoelasticity was measured under the following measurement conditions in conformity with JIS K7244-4, and the loss coefficient (tan $\delta$) at 23°C was determined and evaluated according to the following evaluation criteria.

[Measurement conditions]

- Measurement instrument: Dynamic viscoelasticity measuring apparatus Rheogel-E4000 manufactured by UBM Co., Ltd.
- Sample shape: 40±3 mm long, 5±0.3 mm wide, 3±0.3 mm thick strip
- Measurement mode: Tensile mode with sinusoidal wave strain
- Distance between chucks: 30±0.2 mm
- Temperature: -50°C to 200°C
- Frequency: 10 Hz
- Load: Automatic static load
- Dynamic strain: 3 um

[Evaluation criteria]

Excellent: less than 0.08
Favorable: 0.08 or more and less than 0.1
Acceptable: 0.1 or more and less than 0.15
Poor: 0.15 or more

(4) Change in resilience depending on temperature (-20°C[tan$\delta$]/25°C[tan$\delta$])

The loss coefficient at -20°C (-20°C[tan$\delta$]) and the loss coefficient at 25°C (25°C[tan$\delta$]) were calculated from the measurement data of dynamic viscoelasticity as in (3) above, and -20°C[tan$\delta$]/25°C[tan$\delta$] was evaluated according to the following evaluation criteria.

[Evaluation criteria]

Excellent: 0.75 or more and less than 1.25
Favorable: 0.6 or more and less than 0.75, or 1.25 or more and less than 1.4
Acceptable: 0.4 or more and less than 0.6, or 1.4 or more and less than 1.6
Poor: less than 0.4 or 1.6 or more

(5) Temperature dependence of sole repulsion

The obtained sole was cut into pieces (25 cm long × 10 cm wide × 3 cm thick) to obtain a test piece. The test piece was placed in a room at 20°C and 50% RH (relative humidity), and the temperature was controlled for 24 hours.
An aluminum sphere having a diameter of 2 cm was dropped from a height of 50 cm from the top of the test piece, the distance from the test piece to the bottom of the aluminum sphere at the time of maximum repulsion was measured, and the repulsion distance was denoted as $L_{20}$.

The test piece was placed in a room at -20°C and 500 RH, the temperature was controlled for 24 hours, and then a similar test was conducted, and the repulsion distance was denoted as $L_{-20}$.

The temperature dependence of sole repulsion was calculated from the above-measured $L_{20}$ and $L_{-20}$ by the following equation, and evaluated according to the following evaluation criteria.

Temperature dependence of sole repulsion = $L_{-20} \times 100/L_{20}$

[Evaluation criteria]

Excellent: 90 or more
Favorable: 80 or more and less than 90
Acceptable: 70 or more and less than 80
Poor: less than 70

[Table 1]

| | | | Example | | | | | | | | | | | | | | | | |
|---|---|---|---|---|---|---|---|---|---|---|---|---|---|---|---|---|---|---|---|
| | | | 31 | 32 | 33 | 34 | 35 | 36 | 37 | 38 | 39 | 40 | 41 | 42 | 43 | 44 | 45 | 46 | 47 | 48 |
| | Shoe sole | | Z-1 | Z-2 | Z-3 | Z-4 | Z-5 | Z-6 | Z-7 | Z-8 | Z-9 | Z-10 | Z-11 | Z-12 | Z-13 | Z-14 | Z-15 | Z-16 | Z-17 | Z-18 |
| Raw material composition (parts) | Block polymer for shoe sole | (X-1) | 100 | - | - | - | - | - | - | - | - | - | - | - | - | - | - | - | - | - |
| | | (X-2) | - | 100 | - | - | - | - | - | - | - | - | - | - | - | - | - | - | - | - |
| | | (X-3) | - | - | 100 | - | - | - | - | - | - | - | - | - | - | - | - | - | - | - |
| | | (X-4) | - | - | - | 100 | - | - | - | - | - | - | - | - | - | - | - | - | - | - |
| | | (X-5) | - | - | - | - | 100 | - | - | - | - | - | - | - | - | - | - | - | - | - |
| | | (X-6) | - | - | - | - | - | 100 | - | - | - | - | - | - | - | - | - | - | - | - |
| | | (X-7) | - | - | - | - | - | - | 100 | - | - | - | - | - | - | - | - | - | - | - |
| | | (X-8) | - | - | - | - | - | - | - | 100 | - | - | - | - | - | - | - | - | - | - |
| | | (X-9) | - | - | - | - | - | - | - | - | 100 | - | - | - | - | - | - | - | - | - |
| | | (X-10) | - | - | - | - | - | - | - | - | - | 100 | - | - | - | - | - | - | - | - |
| | | (X-11) | - | - | - | - | - | - | - | - | - | - | 100 | - | - | - | - | - | - | - |
| | | (X-12) | - | - | - | - | - | - | - | - | - | - | - | 100 | - | - | - | - | - | - |
| | | (X-13) | - | - | - | - | - | - | - | - | - | - | - | - | 100 | - | - | - | - | - |
| | | (X-14) | - | - | - | - | - | - | - | - | - | - | - | - | - | 100 | - | - | - | - |
| | | (X-15) | - | - | - | - | - | - | - | - | - | - | - | - | - | - | 100 | - | - | - |
| | | (X-16) | - | - | - | - | - | - | - | - | - | - | - | - | - | - | - | 100 | - | - |
| | | (X-17) | - | - | - | - | - | - | - | - | - | - | - | - | - | - | - | - | 100 | - |
| | | (X-18) | - | - | - | - | - | - | - | - | - | - | - | - | - | - | - | - | - | 100 |
| | Blowing agent | (C-1) | 4 | 4 | 4 | 4 | 4 | 4 | 4 | 4 | 4 | 4 | 4 | 4 | 4 | 4 | 4 | 4 | 4 | 4 |
| Evaluation | Density (g/cm³) | | 0.31 | 0.30 | 0.30 | 0.29 | 0.30 | 0.30 | 0.31 | 0.30 | 0.29 | 0.30 | 0.29 | 0.29 | 0.31 | 0.31 | 0.30 | 0.29 | 0.29 | 0.30 |
| | Compressive strain | | Excellent | Excellent | Excellent | Excellent | Excellent | Excellent | Excellent | Excellent | Excellent | Excellent | Excellent | Excellent | Favorable | Excellent | Excellent | Excellent | Excellent | Excellent |
| | Resilience [tanδ] | | Favorable | Excellent | Favorable | Excellent | Excellent | Excellent | Excellent | Excellent | Excellent | Excellent | Excellent | Favorable | Excellent | Excellent | Favorable | Favorable | Excellent | Excellent |
| | -20°C[tanδ]/25°C[tanδ] | | Excellent | Excellent | Excellent | Excellent | Excellent | Excellent | Excellent | Excellent | Excellent | Excellent | Excellent | Favorable | Favorable | Favorable | Excellent | Favorable | Excellent | Excellent |
| | Temperature dependence of sole repulsion | | Favorable | Excellent | Favorable | Excellent | Excellent | Excellent | Excellent | Excellent | Excellent | Excellent | Excellent | Favorable | Favorable | Excellent | Favorable | Favorable | Excellent | Excellent |

17

[Table 2]

| | | | Example | | | | | | Comparative Example |
|---|---|---|---|---|---|---|---|---|---|
| | | | 49 | 50 | 51 | 52 | 53 | 54 | 2 |
| Shoe sole | | | Z-19 | Z-20 | Z-21 | Z-22 | Z-23 | Z-24 | Comparative Z-1 |
| Raw material composition (parts) | Resin composition for shoe sole | (Y-19) | 100 | - | - | - | - | - | - |
| | | (Y-20) | - | 100 | - | - | - | - | - |
| | | (Y-21) | - | - | 100 | - | - | - | - |
| | | (Y-22) | - | - | - | 100 | - | - | - |
| | | (Y-23) | - | - | - | - | 100 | - | - |
| | | (Y-24) | - | - | - | - | - | 100 | - |
| | EVA resin | | - | - | - | - | - | - | 100 |
| | Crosslinking agent | DCP | - | - | - | - | - | - | 1 |
| | Blowing agent | (C-1) | 4 | 4 | 4 | 4 | 4 | 4 | 4 |
| Evaluation | Density (g/cm$^3$) | | 0.31 | 0.30 | 0.30 | 0.31 | 0.31 | 0.30 | 0.30 |
| | Compressive strain | | Excellent | Excellent | Excellent | Excellent | Excellent | Excellent | Poor |
| | Resilience [tanδ] | | Excellent | Excellent | Excellent | Excellent | Excellent | Favorable | Acceptable |
| | -20°C[tanδ]/25°C[tanδ] | | Excellent | Excellent | Excellent | Favorable | Excellent | Favorable | Poor |
| | Temperature dependence of sole repulsion | | Excellent | Excellent | Excellent | Favorable | Excellent | Favorable | Poor |

In Tables 1 and 2, the respective raw materials are as follows.

EVA resin: Manufactured by Mitsui Chemicals, Inc., trade name "EVAFLEX 270"
Crosslinking agent: Dicumyl peroxide (DCP) [manufactured by NOF Corporation, trade name "Percmil D"]
Blowing agent (C-1): Azodicarbonamide [manufactured by EIWA CHEMICAL IND. CO., LTD., trade name "Vinyfor DW#6"]

From the results in Tables 1 and 2, it can be seen that the shoe soles (Z) fabricated using the block polymers (X) for shoe soles of the present invention exhibit small compressive strain, excellent durability, and excellent resilience (a low loss coefficient, a small change in resilience depending on the temperature) compared to those for comparison.

INDUSTRIAL APPLICABILITY

The block polymer (X) for a shoe sole of the present invention can be suitably used as a raw material resin for various shoe soles (outsoles, midsoles). The shoe sole (Z) fabricated using the block polymer (X) for a shoe sole exhibits small compressive strain, excellent durability, and excellent resilience, and is thus useful as a midsole or an outsole.

**Claims**

1.  A block polymer (X) for a shoe sole, comprising as constituent units:

    a block of polyolefin (a) below; and
    a block of polyalkylene glycol (b) below,
    the polyolefin (a) containing propylene and ethylene as constituent monomers with a weight ratio of propylene to ethylene (propylene/ethylene) within a range of 90/10 to 99.5/0.5, and
    the polyalkylene glycol (b) containing C3-C4 alkylene glycol as a constituent monomer.

2.  The block polymer (X) for a shoe sole according to claim 1,
    wherein the block of polyolefin (a) has a number average molecular weight of 1,000 to 10,000.

3.  The block polymer (X) for a shoe sole according to claim 1,
    wherein the block of polyalkylene glycol (b) has a number average molecular weight of 500 to 4,000.

4.  The block polymer (X) for a shoe sole according to any one of claims 1 to 3,
    wherein a weight ratio of the block of polyolefin (a) to the block of polyalkylene glycol (b) [(a)/(b)] is within a range of 20/80 to 80/20.

5. The block polymer (X) for a shoe sole according to any one of claims 1 to 3,
wherein the block polymer (X) for a shoe sole contains a structure crosslinked with a crosslinking agent (K) including at least three functional groups capable of reacting with a functional group at an end of at least one of polyolefin (a) or polyalkylene glycol (b).

6. The block polymer (X) for a shoe sole according to any one of claims 1 to 3,
wherein the block polymer (X) for a shoe sole has a number average molecular weight of 5,000 to 150,000.

7. A resin composition (Y) for a shoe sole, comprising:

the block polymer (X) for a shoe sole according to claim 1; and
a thermoplastic resin (E) other than the block polymer (X) for a shoe sole.

8. A shoe sole (Z) that is a molded foam of the block polymer (X) for a shoe sole according to claim 1 or a molded foam of the resin composition (Y) for a shoe sole according to claim 7.

9. The shoe sole (Z) according to claim 8,
wherein the shoe sole (Z) has a density of 0.20 to 0.90 g/cm$^3$.

## INTERNATIONAL SEARCH REPORT

| | International application No. |
|---|---|
| | **PCT/JP2022/040873** |

**A. CLASSIFICATION OF SUBJECT MATTER**

*C08G 81/02*(2006.01)i; *A43B 13/04*(2006.01)i; *C08L 53/00*(2006.01)i
FI:   C08G81/02; A43B13/04 A; C08L53/00

According to International Patent Classification (IPC) or to both national classification and IPC

**B. FIELDS SEARCHED**

Minimum documentation searched (classification system followed by classification symbols)

C08G81/02; A43B13/04; C08L53/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-332355 A (SANYO CHEM IND LTD) 22 November 2002 (2002-11-22) claims, paragraphs [0008], [0112], examples 1, 8 | 1-4, 6-9 |
| A | | 5 |
| X | JP 2002-284880 A (SANYO CHEM IND LTD) 03 October 2002 (2002-10-03) claims, paragraphs [0008]-[0011], [0184], production example 1, example 1 | 1-4, 6-9 |
| A | | 5 |
| A | JP 2005-272828 A (SANYO CHEM IND LTD) 06 October 2005 (2005-10-06) entire text | 1-9 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 January 2023** | **24 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/040873**

| Patent document cited in search report | | | Publication date (day/month/year) | Patent family member(s) | Publication date (day/month/year) |
|---|---|---|---|---|---|
| JP | 2002-332355 | A | 22 November 2002 | (Family: none) | |
| JP | 2002-284880 | A | 03 October 2002 | (Family: none) | |
| JP | 2005-272828 | A | 06 October 2005 | (Family: none) | |

Form PCT/ISA/210 (patent family annex) (January 2015)

**EP 4 431 547 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008093412 A

- JP H362804 A